# EUROPÄISCHE PATENTSCHRIFT

(11) **EP 2 845 635 B1**
(45) Veröffentlichungstag und Bekanntmachung des Hinweises auf die Patenterteilung: **11.01.2017**
(21) Anmeldenummer: 14183549.6
(22) Anmeldetag: 04.09.2014
(51) Int. Cl.: B01D 19/00, F01P 11/02, F24D 19/10

(54) **ENTLÜFTER**
VENTILATOR
VENTILATEUR

(30) Priorität: 10.09.2013 DE 102013014825; 20.11.2013 DE 102013223689
(43) Veröffentlichungstag der Anmeldung: 11.03.2015
(73) Patentinhaber: Vaillant GmbH, 42859 Remscheid (DE)
(72) Erfinder: Bott, Stefan, 40625 Düsseldorf (DE); Klein, Daniel, 51491 Overath (DE)
(74) Vertreter: Popp, Carsten

(56) Entgegenhaltungen:
- EP-A1- 1 820 550
- DE-C- 469 293
- US-A- 2 540 390
- US-A- 3 255 740
- US-A- 4 480 598
- US-A1- 2009 038 478
- US-A1- 2011 073 597

## Beschreibung

Die Erfindung betrifft einen Entlüfter zum Entgasen von Flüssigkeiten, insbesondere aus Wasser in einem Heizkreislauf sowie einen hydraulischen Kreislauf mit einem Entlüfter.

Aufgabe eines gattungsgemäßen Entlüfters ist es, Luft aus einem Heizkreislauf abzuscheiden und aus dem Kreislauf zu entfernen. Aus der DE 26 20 380 A1 ist es bekannt, dass in Folge der relativ hohen Strömungsgeschwindigkeit des Wassers in einem der Beheizung dienenden Leitungssystem die mit dem Wasser mitgerissenen Luftblasen über die der Abscheidung dienenden Stellen hinweg gerissen werden. Daher schlägt die DE 26 20 380 A1 vor, die Luft in einer Verzögerungskammer mit vergrößertem Querschnitt und somit mit verringerter Strömungsgeschwindigkeit abzuscheiden und über ein Ventil oberhalb der Verzögerungskammer aus dem geschlossenen System abzulassen.

Aus der Patentanmeldung EP 1 820 550 A1 ist ein Verfahren zum Entgasen einer Flüssigkeit mittels einer Entlüftungseinrichtung bekannt. Es wird vorgeschlagen, aus einer Leitung einen Teilstrom abzuzweigen und der Entlüftungseinrichtung zuzuführen. In der Entlüftungseinrichtung wird die Flüssigkeit über ein schwingendes Element Schwingungen ausgesetzt, Dazu werden durch die Speisepumpe, die den Teilstrom in die Entlüftungseinrichtung fördert, erzeugte Schwingungen auf das schwingende Element übertragen. Das durch die Schwingungen gelöste Gas sammelt sich im oberen Bereich des Flüssigkeitsbehälters der Entlüftungseinrichtung, in der ein durch einen Schwimmer betätigtes Entlüftugsventil das Gas ablässt.

Aus dem Patent US 3,255,740 ist es bekannt, im Kühlkreislauf eines Kraftfahrzeugmotors den Kühler als Verzögerungskammer zu verwenden und im oberen Bereich des Kühlers die sich abgetrennte Luft zu sammeln und über ein Ventil abzuführen.

Die Patentanmeldung US 2011/0073597 A1 offenbart ein Kühlsystem für einen Verbrennungsmotor, welches eine Entgasungsleitung aufweist, die in ein Ausdehnungsgefäß mit einem Rückschlagventil, das stromabwärts unmittelbar am unteren Bereich des Ausdehnungsgefäßes angeordnet ist, mündet. In diesem Ausdehnungsgefäß kann sich das in der Entgasungsleitung abgeschiedene Gas sammeln und gegebenenfalls über ein Druckventil entweichen.

In der Patentschrift DE 469 293 wird eine Luftabscheidevorrichtung offenbart, die aus einer Kammer mit einem Zufluss, einem Abfluss und einem Entlüftungsventil besteht. Die Zuflussöffnung ist unterhalb der Abflussöffnung angeordnet. Im oberen Bereich ist ein Ventil zum Ablassen der abgeschiedenen Luft angeordnet, das von einem Schwimmer in der Weise betätigt wird, dass bei Anwesenheit von Luft im oberen Bereich der Kammer das Ventil geöffnet ist. Unterhalb des Schwimmers ist die Abflussöffnung angeordnet, so dass der Schwimmer in einer unteren Position die Abflussöffnung verschließt. Um bei einer teilweise geöffnetem Abflussöffnung ein Einströmenden von Luftblasen in die Abflussöffnung zu verhindern, ist unterseitig des Schwimmers eine Scheibe mit einem nach unten gerichteten Kragen angeordnet.

Alternativ ist es aus dem Stand der Technik bekannt, die Verzögerungskammer als Hohlzylinder mit senkrecht ausgerichteter Achse auszuführen, wobei der Zulauf im oberen und der Ablauf im unteren Teil angeordnet ist. Dadurch, dass der Zulauf als Rohr in den Zylinder hineinragt, wird im oberen Teil des Zylinders eine Kammer gebildet, in der die Luftblasen aufsteigen können, ohne von der Strömung mitgerissen zu werden. Durch die Verlangsamung der Fließgeschwindigkeit können. Luftblasen durch Ihre geringere Dichte als Wasser entgegen der Strömungsrichtung aufsteigen und werden in einer Gassammelkammer im oberen Bereich des Zylinders gesammelt.

Der Nachteil der aus dem Stand der Technik bekannten Lösungen ist, dass Luftblasen häufig mit der Strömung mitgerissen werden und nicht in der Gassammelkammer gesammelt werden. Die Wirksamkeit der Entlüftung variiert je nach Fließgeschwindigkeit und ist teils unzureichend, so dass eine Entlüftung erst nach mehrfachem Durchfließen erreicht wird.

Gerade im Zusammenhang mit Energie sparenden Umwälzpumpen mit variabler Drehzahl, die sich an die jeweiligen Anforderungen anpassen lässt, gewinnt die Wirksamkeit einer Entlüftung über einen breiten Fließgeschwindigkeitsbereich zunehmend an Bedeutung.

Es ist daher Aufgabe der Erfindung, einen Entlüfter für einen hydraulischen Heizkreislauf bereitzustellen, der in einem weiten Strömungsgeschwindigkeitsbereich effektiv Luftblasen aus dem Heizkreislauf abscheidet.

Diese Aufgabe wird gemäß den Merkmalen des Anspruchs 1 dadurch gelöst, dass zwischen der Verzögerungskammer und den Ablauf ein Ventil angeordnet ist, das einen an die Verzögerungskammer angrenzenden Teller umfasst. Dadurch werden Gasblasen durch Kollision mit der Telleroberfläche sowie durch Verwirbelungen reflektiert und so dem Fluidstrom entrissen, wodurch sie aus eigener Kraft aufgrund des Dichteunterschieds in die Gassammelkammer aufsteigen.

Dabei öffnet sich das Ventil mit zunehmendem Volumenstrom. Somit bleibt die Entlüftungsleistung bei unterschiedlichen Fließgeschwindigkeiten konstant. Dazu ist der Teller axial in Strömungsrichtung verschiebbar. Dieser ist gegen die Kraft einer Feder verschiebbar.

Eine in einer Weiterbildung der Erfindung beschriebene Kegelform des Tellers beugt Druckverlusten vor.

In einer bevorzugten Weiterbildung ist das Ventil so ausgeführt, dass es im Stillstand einem Rückfluss entgegen der Strömungsrichtung verhindert. Dadurch wird als zusätzlicher Vorteil erreicht, dass ein in dem hydraulischen System notwendiger zusätzlicher Rückflussverhinderer entfallen kann. Ein Rückflussverhinderer ist beispielsweise bei solarthermischen Anlagen üblich, um eine Schwerkraftzirkulation im Stillstand zu verhindern.

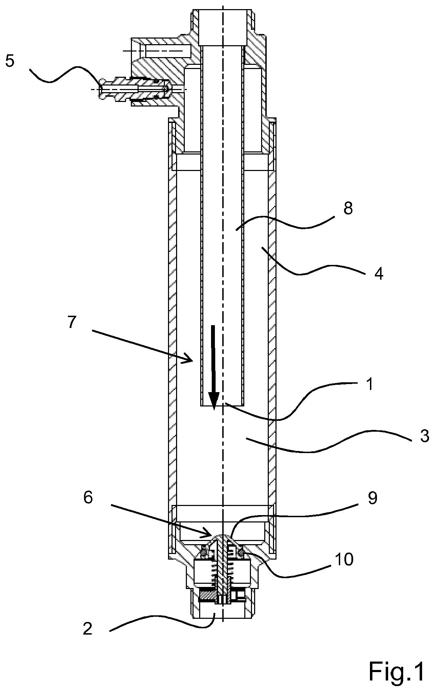

Die Erfindung wird nun anhand der Figur detailliert erläutert. Figur 1 stellt einen erfindungsgemäßen Entlüfter dar. Der Entlüfter ist beispielsweise als Bestandteil in einem hier nicht dargestellten Wasserkreislauf für eine Heizung vorgesehen. Über einen Zulauf 1 wird das möglicherweise Luftblasen enthaltende Wasser zugeführt. Das Wasser wird nun in eine gemeinsame Kammer 7 geführt, die eine Verzögerungskammer 3 und eine Gassammelkammer 4 umfasst. Beispielsweise kann die gemeinsame Kammer 7 die Form eines zylindrischen Rohrabschnitts aufweisen. Da der Durchmesser der Verzögerungskammer 3 größer ist als der Durchmesser des Zulaufs 1, wird die Strömungsgeschwindigkeit verringert, so dass die enthaltenen Luftblasen nicht mitgerissen werden und in der Verzögerungskammer 3 aufsteigen und sich in der Gassammelkammer 4 sammeln. Die Gassammelkammer 4 ist mit einer Gasableitung 5 verbunden, wo das Gas mittels eines hier nicht dargestellten Ventils abgeführt wird. Ein hierfür geeignetes Ventil ist beispielsweise aus der DE 26 20380 A1 bekannt.

Im unteren Bereich der Verzögerungskammer 3 ist ein Ventil 6 vorgesehen, welches über einen Teller 9 verfügt und die Verzögerungskammer 3 mit dem Ablauf 2 verbindet. Der Teller 9 ragt dabei in die Verzögerungskammer 3. Das Ventil 6 ist so ausgebildet, dass es mit zunehmender Strömungsgeschwindigkeit zunehmend öffnet. Dies wird in dem Ausführungsbeispiel durch eine Feder realisiert, gegen die sich das Ventil öffnet. Durch Reflektion des Wassers an der Oberfläche des Tellers 9 wird das Wasser zusätzlich entlüftet. Durch die kontinuierliche Öffnung passt sich die Entlüftungswirkung besonders gut an unterschiedliche Strömungsgeschwindigkeiten an.

Zur Verbesserung der Entlüftung müssen die im Fluidstrom enthaltenen Luftblasen an dem Teller 9 abprallen und verwirbeln, so dass Sie in der Verzögerungskammer 3 nach oben steigen können. Ohne den Teller würde ein Großteil der Blasen trotz Verzögerungskammer 3 im mittleren Strom mitgerissen. Wenn das Ventil 6 mit dem Teller 9 immer ganz auf wäre, wäre der Abstand zwischen Teller 9 und dem Anschlag des Tellers 9 so groß, dass die Luftblasen mit durch den großen Spalt gerissen werden. Erst die mittlere Stellung, welche sich durch den erfindungsgemäßen Entlüfter automatisch abhängig vom Massenstrom einstellt, sorgt für eine Kollision der Blasen. Je schneller das Fluid fließt, desto höher ist die Kraft, die auf den Teller 9 wirkt. Diese Kraft wirkt auf die Feder, welche mit einer entsprechenden Gegenkraft den Teller 9 in Position hält. Somit verbleibt der Teller immer für die Entlüftung optimalen Position, die sich von einem Fachmann leicht durch Berechnung oder experimentell ermitteln lässt, so dass der Fachmann eine entsprechende Federsteifigkeit auswählen kann.

Zusätzlich weist das Ventil 6 eine Dichtung 10 auf, so dass das Ventil zugleich als Rückschlagventil wirkt. Dadurch kann ein Rückschlagventil an anderer Stelle des Wasserkreislauf eingespart werden.

### Bezugszeichenliste

- 1: Zulauf
- 2: Ablauf
- 3: Verzögerungskammer
- 4: Gassammelkammer
- 5: Gasableitung
- 6: Ventil
- 7: Gemeinsame Kammer
- 8: Rohr
- 9: Teller
- 10: Dichtung

## Patentansprüche

1. Entlüfter, insbesondere für einen hydraulischen Heizkreislauf, wobei der Entlüfter einen Zulauf (1), einen Ablauf (2), eine Verzögerungskammer (3) mit vergrößertem Querschnitt zum Abscheiden von Gasblasen, eine Gassammelkammer (4) und eine Gasableitung (5) umfasst, wobei der Zulauf (1) in Einbaulage oberhalb des Ablaufs (2) und die Gassammelkammer (4) oberhalb des Zulaufs (1) angeordnet ist, **dadurch gekennzeichnet, dass** die Verzögerungskammer (3) und die Gassammelkammer (4) als gemeinsame Kammer (7) ausgebildet sind und dass der Zulauf (1) durch das Ende eines Rohres (8) gebildet wird, welches von oben als Tauchrohr in die gemeinsame Kammer (7) hineinragt, wobei die Position der den Zulauf (1) bildenden Öffnung des Rohres (8) die Grenze zwischen Verzögerungskammer (3) und Gassammelkammer (4) definiert, und dass zwischen der Verzögerungskammer (3) und dem Ablauf (2) ein Ventil (6) angeordnet ist, welches einen an die Verzögerungskammer (3) angrenzenden Teller (9) umfasst, wobei das Ventil (6) so ausgebildet ist, dass es in Strömungsrichtung kontinuierlich mit zunehmender Strömungsgeschwindigkeit zunehmend öffnet, wobei dazu der Teller (9) gegen die Kraft einer Feder zum Öffnen axial in Strömungsrichtung verschiebbar ist.

2. Entlüfter nach Anspruch 1, **wobei** der Teller (9) eine strömungsgünstige Form, bevorzugt eine Kegelform aufweist.

3. Entlüfter nach einem der vorhergehenden Ansprüche, **wobei** das Ventil (6) so ausgebildet ist, dass es im Stillstand einen Rückfluss entgegen der Strömungsrichtung verhindert.

4. Hydraulischer Kreislauf, **dadurch gekennzeichnet, dass** der hydraulische Kreislauf einen Entlüfter nach einem der Ansprüche 1 bis 3 umfasst.

## Claims

1. Ventilator, in particular for a hydraulic heating circuit, whereby the ventilator comprises an inlet (1), an outlet (2), a delay chamber (3) with enlarged cross-section to separate gas bubbles, a gas collection chamber (4) and a gas drain (5), whereby the inlet (1) is arranged above the outlet (2) and the gas collection chamber (4) is arranged above the inlet (1) when in installed position **characterised in that** the delay chamber (3) and the gas collection chamber (4) are configured as a common chamber (7) and that the inlet (1) is formed by the end of a tube (8) that extends from above as a submerged tube into the common chamber (7), whereby the position of the opening of the tube (8) forming the inlet (1) defines the border between delay chamber (3) and gas collection chamber (4), and that a valve (6) is arranged between the delay chamber (3) and the outlet (2) and comprises a plate (9) bordering the delay chamber (3), whereby the valve (6) is configured such that it continually increasingly opens in the flow direction with increasing flow speed, whereby to this end the plate (9) is displaceable against the force of a spring to open axially in flow direction.

2. Ventilator according to claim 1, **whereby** the plate (9) has a shape favourable to flow, preferably a cone shape.

3. Ventilator according to one of the preceding claims, **whereby** the valve (6) is configured such that, in standstill, it prevents a backflow against the flow direction.

4. Hydraulic circuit, **characterised in that** the hydraulic circuit comprises a ventilator according to one of claims 1 to 3.

## Revendications

1. Système purgeur d'air, en particulier pour un circuit de chauffage hydraulique, dans lequel le système purgeur d'air comprend une arrivée (1), une évacuation (2), une chambre de retardement (3) comprenant une section transversale agrandie servant à séparer des bulles de gaz, une chambre de collecte de gaz (4) et un conduit d'évacuation de gaz (5), dans lequel l'arrivée (1) est disposée, en position montée, au-dessus de l'évacuation (2) et la chambre de collecte de gaz (4) est disposée au-dessus de l'arrivée (1), **caractérisé en ce que** la chambre de retardement (3) et la chambre de collecte de gaz (4) sont réalisées sous la forme d'une chambre (7) commune, et **en ce que** l'arrivée (1) est formée par l'extrémité d'un tube (8), qui dépasse depuis le haut sous la forme d'un tube plongeur dans la chambre (7) commune, dans lequel la position de l'ouverture, formant l'arrivée (1), du tube (8) définit la limite entre la chambre de retardement (3) et la chambre de collecte de gaz (4), et **en ce qu'**une soupape (6) est disposée entre la chambre de retardement (3) et l'évacuation (2), laquelle comprend un disque (9) jouxtant la chambre de retardement (3), dans lequel la soupape (6) est réalisée de telle sorte qu'elle s'ouvre de plus en plus dans le sens d'écoulement en continu avec une vitesse d'écoulement croissante, dans lequel le disque (9) peut être à cet effet déplacé par un coulissement axial dans le sens d'écoulement à l'encontre de la force d'un ressort aux fins de l'ouverture.

2. Système purgeur d'air selon la revendication 1, **dans lequel** le disque (9) présente une forme propice à l'écoulement, de préférence une forme conique.

3. Système purgeur d'air selon l'une quelconque des revendications précédentes, **dans lequel** la soupape (6) est réalisée de telle sorte qu'elle empêche, à l'arrêt, un reflux dans le sens opposé au sens d'écoulement.

4. Circuit hydraulique, **caractérisé en ce que** le circuit hydraulique comprend un système purgeur d'air selon l'une quelconque des revendications 1 à 3.
